# EUROPEAN PATENT SPECIFICATION

(11) **EP 3 351 085 B1**
(45) Date of publication and mention of the grant of the patent: **13.07.2022**
(21) Application number: 18153085.8
(22) Date of filing: 23.01.2018
(51) Int. Cl.: A01D 34/82

(54) **TRIMMER GUARD AND TRIMMER**
TRIMMERSCHUTZ UND TRIMMER
PROTECTION DE TONDEUSE ET TONDEUSE

(30) Priority: 24.01.2017 CN 201720105089 U
(43) Date of publication of application: 25.07.2018
(73) Proprietor: Techtronic Outdoor Products Technology Limited, Hamilton HM12 (BM)
(72) Inventor: WANG, Yu Long, Houjie Town, Dongguan City, Guangdong (CN)
(74) Representative: Novagraaf Group

(56) References cited:
- EP-A2- 2 381 757
- US-A1- 2006 108 128
- US-A1- 2008 289 194
- US-A1- 2016 227 705

## Description

### TECHNICAL FIELD

The invention relates to a trimmer and more particularly to a trimmer guard.

### BACKGROUND

Trimmers are often used for mowing lawn and cutting grass. In some applications, the operator can use a trimmer to trim the edge of the tree, or trim near a fence or wall.

A conventional line trimmer generally includes a handle assembly and a cutting assembly. The handle assembly mainly includes a handle and an elongated shaft. The cutting assembly mainly includes a power source (engine or motor) and a rotary cutting tool arranged at an end portion of the elongated shaft. The rotary cutting tool generally has a spool or head which includes a trimmer line or blade. In operation, the trimmer line or blade is driven into rotation for cutting and trimming operations.

The trimmer generates noise during operation. The noise is mainly caused by the power source and the rotary cutting tool that spins and hits the grass at high speeds. Prolonged exposure to a high level of noise may have negative physiological and psychological effects on the operator of the trimmer.

According to its abstract, EP-A-2381757, explains that in order to reduce the operating noise of a lawn mowing machine of the lawn trimmer type, having a cutting element rotating about a vertical axis of rotation and extending under a protective cover from a cutting area, in particular a cutting line, the invention proposes that penetrations are produced in a surface area near the edge, behind the inlet edge of the protective cover, forming air flow channels between the bottom side and the top side of the protective cover.

### SUMMARY OF THE INVENTION

It is an object of the invention to address the above needs, to overcome or substantially ameliorate the above disadvantages or, more generally, to provide an improved trimmer guard such as one with noise reduction function. The trimmer guard in the invention can be used with different types of trimmers, such as handheld-type or push-type line trimmers, trimmers, lawn mowers, etc.

In accordance with a first aspect of the invention, there is provided a trimmer guard with a body comprising: a deck having an inner side adapted for connecting the trimmer guard to a trimmer; an outer side that is substantially arc-shaped; a first edge arranged between the inner side and the outer side; and a second edge opposite the first edge and arranged between the inner side and the outer side; a skirt extending from the outer side at an angle to the deck; and a first flange arranged at the first edge at an angle to the deck; when the trimmer guard is connected to a trimmer, the deck and the skirt together define a space for housing a rotary cutting tool of a cutting assembly of the trimmer; wherein a plurality of grooves are arranged along the first flange, the grooves are adapted to reduce noise generated by the trimmer during operation.

In one embodiment of the first aspect, the grooves are U-shaped grooves or V-shaped grooves.

In one embodiment of the first aspect, the grooves are arranged on a straight edge of the first flange.

In one embodiment of the first aspect, the number of the grooves is between 8 and 16. In a preferred embodiment, the number of the grooves is 12. Preferably, the grooves are spaced apart evenly.

In one embodiment of the first aspect, the body further comprises a second flange, arranged at the second edge at an angle to the deck. Preferably, the second flange does not include grooves. Preferably, the body defines: a rotary cutting tool inlet arranged at the second edge, and a rotary cutting tool outlet arranged at the first edge.

In one embodiment of the first aspect, the body further comprises one or more ribs connected between the first flange and the deck. Preferably, the one or more ribs are substantially perpendicular to the first flange and the deck. The number of the ribs is between 2 to 6. In a preferred embodiment, the number of the ribs is 4. Preferably, the ribs are spaced apart evenly.

In one embodiment of the first aspect, an angle between the skirt and the deck is between 90 degrees to 135 degrees.

In one embodiment of the first aspect, an angle between the skirt and the deck is about 90 degrees.

In one embodiment of the first aspect, an angle between the first flange and the deck is about 90 degrees.

In a preferred embodiment, the body is integrally formed. The body may be formed by molding with plastic.

In accordance with a second aspect of the invention, there is provided a trimmer comprising: a handle assembly; a cutting assembly arranged at one end of the handle assembly, including a rotary cutting tool arranged to be powered by a power source to perform cutting operations; and a trimmer guard of the first aspect, connected to the cutting assembly. The power source can be a motor or alternatively a gas or petrol engine.

Preferably, the rotary cutting tool comprises a trimmer line or blade.

Preferably, the trimmer is a line trimmer. In one embodiment of the second aspect, the trimmer can be electric (alternating current or direct current) or pneumatic.

In accordance with a third aspect of the invention, there is provided a trimmer kit comprising: a handle assembly; a cutting assembly including a rotary cutting tool arranged to be powered by a power source to perform cutting operations; and a trimmer guard of the first aspect. Optionally, the trimmer kit further comprises a fastener arranged for connecting trimmer guard to the trimmer.

The trimmer guard of the invention has a simple structure, is easy to manufacture and use, and can effectively reduce noise generated by the trimmer during operation without affecting safety. The arrangement of grooves along the first flange of the trimmer guard of the invention can reduce noise while avoiding making the size of the trimmer guard large. This is advantageous because otherwise the product would have a larger size and so the carton for the product is larger. This indirectly increases transportation costs. Also, it is possible to modify existing trimmer guards based on the trimmer guard structure of the invention to obtain the advantageous noise reduction effect.

Other aspects of the invention will become apparent by consideration of the detailed description and accompanying drawings.

### BRIEF DESCRIPTION OF THE DRAWINGS

Embodiments of the invention will now be described, by way of example, with reference to the accompanying drawings in which:
Figure 1 shows a perspective view of a trimmer in accordance with one embodiment of the invention;
Figure 2A shows a perspective view of a trimmer guard in accordance with one embodiment of the invention;
Figure 2B shows another perspective view of the trimmer guard of Figure 2A;
Figure 2C is a sectional view taken along line A-A in Figure 2B;
Figure 2D shows a part-enlarged view of region B in Figure 2B; and
Figure 2E shows another part-enlarged view of region B in Figure 2B.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION OF THE PREFERRED EMBODIMENT

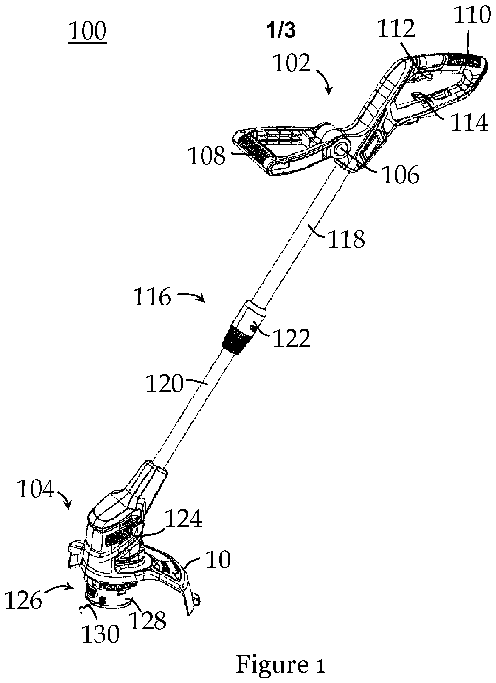

Referring to Figure 1, there is shown a trimmer 100 in one embodiment of the invention. In this embodiment, the trimmer 100 is a line trimmer. The trimmer 100 includes a handle assembly 102 and a cutting assembly 104 arranged at one end of the handle assembly 102.

The handle assembly 102 includes a front handle 108 pivotable about a pivot axis 106 and a fixed rear handle 110. The front handle 108 can include an adjustment and locking mechanism (not shown) to allow the user to adjust and lock an angle of the front handle 108 relative to the rear handle 110. The rear handle 110 is arranged with a trigger 112 to allow the user to operate the cutting assembly 104. Optionally, the rear handle 110 is further arranged with a hook 114 for winding the power cord (when not in use). The handle assembly 102 also includes an elongated shaft assembly 116. In this embodiment, the elongated shaft assembly 116 includes an upper shaft 118 and a lower shaft 120. Handles 108, 110 are connected at one end of the upper shaft 118. The cutting assembly 104 is arranged at one end of the lower shaft 120. Circuits or wires connecting the trigger 112 and the cutting assembly 104 can be arranged inside the elongated shaft assembly 116. A telescopic sleeve 122 is arranged between the upper shaft 118 and the lower shaft 120. A user may rotate the telescopic sleeve 122 to adjust the extent of extension of the upper shaft 118 and the lower shaft 120 so as to adjust an axial length of the shaft assembly 116.

The cutting assembly 104 includes a power source (not shown) arranged in a power source housing 124, and a rotary cutter 126 (i.e., trimmer head) arranged to be driven by the power source to perform cutting operation. In this embodiment, the power source is a motor. The motor includes the motor drive output or drive shaft (not shown) for connecting with and driving a rotary cutting tool of a rotary cutter. The structure of the rotary cutter 126 known and so it not described here. In one example, the structure of the rotary cutter 126 is the same as that described in Chinese patent application CN105850343A, which includes a housing defining at least one opening 128. A trimmer line 130 extends through that opening. In Figure 1, the trimmer line 130 is relaxed and so is not straight. In operation, the motor drives the trimmer line 130 to continuously rotate in a generally circular path perpendicular to the motor drive shaft (the trimmer line being straightened) to cut grass.

The trimmer 100 further includes a trimmer guard 10 mounted to the cutting assembly 104. In this embodiment, the trimmer guard 10 is mounted to the housing 124 of the power source. When connected to the trimmer, the guard 10 is arranged to define a space for housing the rotary cutting tool 130 of the cutting assembly 104.

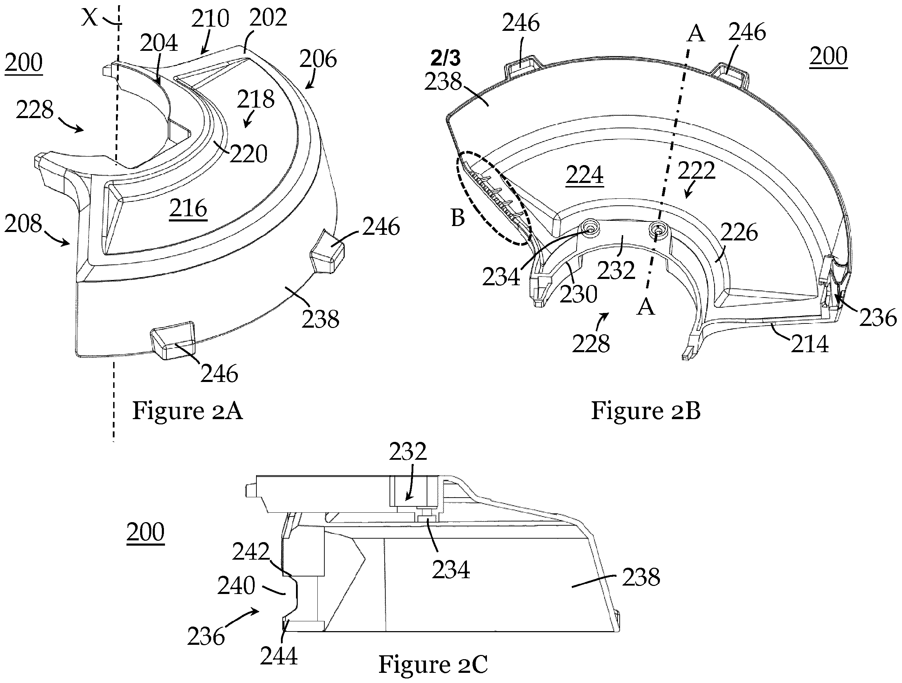

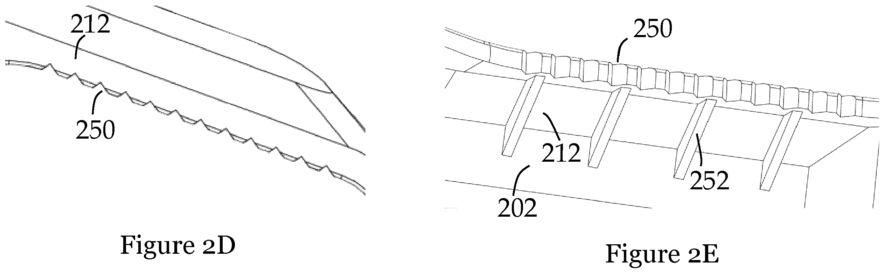

Referring now to Figures 2Ato 2E, there is shown a trimmer guard 200 in one embodiment of the invention. The trimmer guard 200 is arranged to operate with different trimmers, including the trimmer 100 of Figure 1. The body of the guard 200 is preferably integrally formed. The body may be made of plastic, polymer, etc.

As shown in Figures 2A to 2C, the body includes a deck 202 that extends generally in the radial direction from imaginary axis X (e.g., the motor drive shaft of the trimmer) and generally perpendicular to a plane of the axis X. The deck 202 extends between inner side 204 and outer side 206, and generally widens in the direction from the inner side 204 to the outer side 206. In this embodiment, the inner side 204 of the deck 202 includes a structure arranged for connecting the guard to the trimmer. The outer side 206 of the deck 202 is substantially arc-shaped. The deck 202 also includes a first edge 208 arranged between the inner side 204 and the outer side 206, and a second edge 210 arranged between the inner side 204 and the outer side 206 and opposite the first edge 208. A first flange 212 is arranged at the first edge 208 of the deck 202. The first flange 212 is at an angle to the deck. Preferably, the angle is about 90 degrees. The first flange 212 can be substantially straight. In the present embodiment, the first flange 212 has a height of about 3.9mm. Optionally, a second flange 214 is arranged at the second edge 210 of the deck 202. The second flange 214 is also at an angle to the deck 202, the angle is preferably about 90 degrees.

In this embodiment, the upper middle part of the deck 202 includes a radially extending recess 218 that forms a recessed surface 216. In another embodiment, the recess 218 can extend for a different distance, and it is not necessarily arranged at or only arranged at the upper middle part of the deck 202. Also, although only one recess 218 is shown in Figure 2A, in other embodiments, the number of the recess 218 can be two or more. The side wall 220 and the recessed surface 216 of the recess 218 are contours with the upper side of the deck 202, and they form a smooth transition. From Figure 2B it can be seen that the recess 218 provides a protrusion 222 at the lower side of the deck 202. The protrusion 222 has a protruded surface 224, which is opposite to the recessed surface 216 on the upper side of the deck 202. The side wall 226 and protruded surface 224 of the protrusion 222 is continuous with the lower side of the deck 202 and they form a smooth transition.

As shown in Figures 2A and 2B, the inner side of the deck 202 includes a mounting portion 228. The mounting portion 228 is arranged for connecting the guard 200 to the trimmer, in particular to the housing of the cutting assembly of the trimmer. In this embodiment, the mounting potion 228 includes a neck 230 and a stepped portion 232. The shape of one side of the neck 230 corresponds to a corresponding part of the trimmer so as to abut that part of the trimmer. The stepped portion 232 is recessed on the upper side of the deck 202. A plurality of holes 234 for receiving fasteners are arranged in the stepped portion 232. The fasteners can pass through the holes 234 to fasten the guard 200 to the trimmer. Preferably, the holes 234 are threaded and the fasteners may be screws, bolts, and/or studs. A person skilled in the art would appreciate that the specific construction of the mounting portion 228 can change depending on the corresponding mounting structure on the trimmer. For example, it is possible to mount the guard 200 to the trimmer using other means, for example using mechanical connection such as snap fit, friction fit, snap connection, or using electromagnetic connection such as magnetic coupling.

The body further includes a skirt 238 that is at an angle to the deck and extends from the outer side (downwardly). Preferably, the skirt 238 extends along the entire outer side 206. The angle between the skirt 238 and the deck 202 can be about 90 degrees to about 135 degrees. The skirt 238 can connect with the first flange 212 and/or the second flange 214. Optionally, an angle between the skirt 238 and the first flange 212 and/or the second flange 214 is about 90 degrees. The bottom edge of the skirt 238 may include protrusions 246 that extend generally outwardly in the radial direction.

With reference to Figure 2C, the guard 200 further includes a blade mount 236 arranged at the second edge 210. The blade mount 236 is arranged to receive a blade (not shown) for cutting the excess length of the trimmer line. Preferably, the blade mount 236 is arranged such that the cutting edge of the blade mounted inside is perpendicular to the trimmer line and extends generally vertically in the inner side of the skirt 238. In one embodiment, the blade mount 236 includes a cut-out 240 and upper and lower projections 242, 244. When the trimmer line rotations, the outer end of the trimmer line contacts the cutting edge of the blade, the upper and lower projections 242, 244 prevent the trimmer line from sliding down the cutting edge of the blade.

When the guard 200 is mounted to the trimmer, the deck 202 and the skirt 238 together define a space arranged for housing the rotary cutting tool (trimmer line) of the cutting assembly of the trimmer. Preferably, the body defines a rotary cutting tool inlet arranged at the second edge 210 and a rotary cutting tool outlet arranged at the first edge 208. During operation, the trimmer line is driven to rotate in the space, along a generally circular path. When the trimmer line rotates, the skirt 238 shields the outer end of the trimmer line, preventing debris from shooting radially outwardly or upwardly from below the deck 202.

As shown in Figures 2D and 2E, multiple grooves 250 are arranged along the first flange 212 of the guard body. The grooves 250 may be V-shaped grooves or U-shaped grooves, and they are preferably arranged on a straight edge of the first flange 212. In other embodiments, the grooves can be any polygonal grooves. In the present embodiment, the grooves 250 are about 1mm deep. As shown in Figure 2D, the grooves 250 are substantially evenly spaced apart (with substantially the same separation). In the present embodiment, there are 12 grooves 250. However, preferably, the number of grooves is between 8 and 16. In other embodiments, the number of grooves 250 can be less than 8 or more than 16. In the present embodiment, adjacent grooves 250 are spaced apart from each other by about 3mm.

In the invention, the arrangement of multiple grooves along the first flange 212 of the guard body can increase destructive interference of noise to achieve a noise reduction effect. Based on actual measurement, during operation, the trimmer with the guard 200 of the present embodiment with 12 grooves along the first flange generates 96dB noise, while in a guard without grooves along the first flange (other structures remain unchanged) the noise generated is 98dB.

Preferably, the body includes one or more reinforcing ribs 252. The ribs 252 are connected between the first flange 212 and the deck 202, substantially perpendicular to the first flange 212 and the deck 202. In this embodiment, there are 4 ribs 252. But preferably, the number of ribs 252 can be between 2 to 6. In other embodiments, the number of ribs 252 can be more than 6 or less than 2. As shown in Figure 2E, the ribs 252 are spaced apart substantially evenly (with substantially the same separation distance).

It will be appreciated by persons skilled in the art that numerous variations and/or modifications may be made to the invention as shown in the specific embodiments without departing from the scope of the claims.

The present embodiments are, therefore, to be considered in all respects as illustrative and not restrictive.

For example, the guard 200 in the present invention can be used with different types of trimmers, such as handheld-type or push-type line trimmers, trimmers, lawn mowers, etc. Also, the trimmer can be electrical (AC or DC) or can be pneumatic. It is envisaged that the dimension of the trimmer guard, and in particular of the first flange and the grooves, can be modified while still achieving a noise reduction effect.

## Claims

1. A trimmer guard (200) with a body comprising:
a deck (202) having
an inner side (204) adapted for connecting the trimmer guard (200) to a trimmer (100);
an outer side (206) that is substantially arc-shaped;
a first edge (208) arranged between the inner side (204) and the outer side (206); and
a second edge (210) opposite the first edge (208) and arranged between the inner side (204) and the outer side (206); and
a skirt (238) extending from the outer side (206) at an angle to the deck (202);
wherein when the trimmer guard (200) is connected to a trimmer (100), the deck (202) and the skirt (238) together define a space for housing a rotary cutting tool (130) of a cutting assembly of the trimmer (100);
**characterised in that** the trimmer guard (200) further comprises:
a first flange (212) arranged at the first edge (208) at an angle to the deck (202); and
a plurality of grooves (250), wherein the grooves are arranged and spaced apart along an edge of the first flange (212), the grooves (250) being adapted to reduce noise generated by the trimmer (100) during operation.

2. The trimmer guard (200) of claim 1, wherein the grooves (250) are U-shaped grooves or V-shaped grooves.

3. The trimmer guard (200) of claim 1, wherein the grooves (250) are arranged on a straight edge of the first flange (212).

4. The trimmer guard (200) of claim 1, wherein the grooves (250) are spaced apart evenly.

5. The trimmer guard (200) of claim 1, wherein the number of the grooves (250) is between 8 and 16.

6. The trimmer guard (200) of claim 5, wherein the number of the grooves (250) is 12.

7. The trimmer guard (200) of claim 6, wherein adjacent grooves (250) are spaced apart from each other by about 3mm, and wherein each of the plurality grooves (250) is about 1mm deep.

8. The trimmer guard (200) of any one of claims 1 to 7, wherein the body further comprises a second flange (214), arranged at the second edge (210) at an angle to the deck (202),
and wherein the body defines:
a rotary cutting tool inlet arranged at the second edge (210); and
a rotary cutting tool outlet arranged at the first edge (208).

9. The trimmer guard (200) of any one of claims 1 to 7, wherein the body further comprises one or more ribs (252) connected between the first flange (212) and the deck (202) and substantially perpendicular to the first flange (212) and the deck (202).

10. The trimmer guard (200) of claim 9, wherein the number of the ribs (252) is between 2 to 6.

11. The trimmer guard (200) of claim 10, wherein the ribs (252) are spaced apart evenly.

12. The trimmer guard (200) of any one of claims 1 to 7, wherein an angle between the skirt (238) and the deck (202) is between 90 degrees to 135 degrees.

13. The trimmer guard (200) of any one of claims 1 to 7, wherein an angle between the first flange (212) and the deck (202) is about 90 degrees.

14. The trimmer guard (200) of any one of claims 1 to 7, wherein the body is integrally formed.

15. A trimmer (100) comprising:
a handle assembly (102);
a cutting assembly (104) arranged at one end of the handle assembly (102), including
a rotary cutting tool (130) arranged to be powered by a power source to perform cutting operations;
**characterised in that**:
the trimmer (100) further comprises a trimmer guard (200) of any one of claims 1 to 14, connected to the cutting assembly (104).

## Patentansprüche

1. Trimmerschutz (200) mit einem Körper, umfassend:
ein Deck (202) aufweisend
eine Innenseite (204), die zum Verbinden des Trimmerschutzes (200) mit einem Trimmer (100) angepasst ist;
eine Außenseite (206), die im Wesentlichen bogenförmig ist;
eine ersten Kante (208), die zwischen der Innenseite (204) und der Außenseite (206) angeordnet ist; und
eine zweiten Kante (210) gegenüber der ersten Kante (208), die zwischen der Innenseite (204) und der Außenseite (206) angeordnet; und
eine Schürze (238), die sich von der Außenseite (206) in einem Winkel zu dem Deck (202) erstreckt;
wobei, wenn der Trimmerschutz (200) mit einem Trimmer (100) verbunden ist, das Deck (202) und die Schürze (238) zusammen einen Raum zum Aufnehmen eines Rotationsschneidwerkzeugs (130) einer Schneidanordnung des Trimmers (100) definieren;
**dadurch gekennzeichnet, dass** der Trimmerschutz (200) ferner umfasst:
einen ersten Flansch (212), der an der ersten Kante (208) in einem Winkel zum Deck (202) angeordnet ist;
und
eine Vielzahl von Rillen (250), wobei die Rillen entlang einer Kante des ersten Flansches (212) angeordnet und beabstandet sind, wobei die Rillen (250) angepasst sind, um Geräusche zu reduzieren, die durch den Trimmer (100) während des Betriebs erzeugt werden.

2. Trimmerschutz (200) nach Anspruch 1, wobei die Rillen (250) U-förmige Rillen oder V-förmige Rillen sind.

3. Trimmerschutz (200) nach Anspruch 1, wobei die Rillen (250) an einer geraden Kante des ersten Flansches (212) angeordnet sind.

4. Trimmerschutz (200) nach Anspruch 1, wobei die Rillen (250) gleichmäßig voneinander beabstandet sind.

5. Trimmerschutz (200) nach Anspruch 1, wobei die Anzahl der Rillen (250) zwischen 8 und 16 liegt.

6. Trimmerschutz (200) nach Anspruch 5, wobei die Anzahl der Rillen (250) 12 ist.

7. Trimmerschutz (200) nach Anspruch 6, wobei benachbarte Rillen (250) um etwa 3 mm voneinander beabstandet sind, und wobei jede der Vielzahl von Rillen (250) etwa 1 mm tief ist.

8. Trimmerschutz (200) nach einem der Ansprüche 1 bis 7, wobei der Körper ferner einen zweiten Flansch (214) umfasst, der an der zweiten Kante (210) in einem Winkel zu dem Deck (202) angeordnet ist,
und wobei der Körper definiert:
einen Rotationsschneidwerkzeugeinlass, der an der zweiten Kante (210) angeordnet ist; und
einen Rotationsschneidwerkzeugauslass, der an der ersten Kante (208) angeordnet ist.

9. Trimmerschutz (200) nach einem der Ansprüche 1 bis 7, wobei der Körper ferner eine oder mehrere Rippen (252) umfasst, die zwischen dem ersten Flansch (212) und dem Deck (202) verbunden sind und im Wesentlichen senkrecht zu dem ersten Flansch (212) und dem Deck (202) sind.

10. Trimmerschutz (200) nach Anspruch 9, wobei die Anzahl der Rippen (252) zwischen 2 und 6 liegt.

11. Trimmerschutz (200) nach Anspruch 10, wobei die Rippen (252) gleichmäßig voneinander beabstandet sind.

12. Trimmerschutz (200) nach einem der Ansprüche 1 bis 7, wobei ein Winkel zwischen der Schürze (238) und dem Deck (202) zwischen 90 Grad bis 135 Grad liegt.

13. Trimmerschutz (200) nach einem der Ansprüche 1 bis 7, wobei ein Winkel zwischen dem ersten Flansch (212) und dem Deck (202) etwa 90 Grad beträgt.

14. Trimmerschutz (200) nach einem der Ansprüche 1 bis 7, wobei der Körper einstückig ausgebildet ist.

15. Trimmer (100), umfassend:
eine Griffanordnung (102);
eine Schneidanordnung (104), die an einem Ende der Griffanordnung (102) angeordnet ist, einschließlich
einem Rotationswerkzeug (130), das ausgelegt ist, um durch eine Stromquelle mit Strom versorgt zu werden, um Schneidvorgänge durchzuführen;
**dadurch gekennzeichnet, dass:**
der Trimmer (100) ferner einen Trimmerschutz (200) nach einem der Ansprüche 1 bis 14 umfasst, der mit der Schneidanordnung (104) verbunden ist.

## Revendications

1. Protection de tondeuse (200) avec un corps comprenant :
un pont (202) ayant
un côté intérieur (204) conçu pour raccorder la protection de tondeuse (200) à une tondeuse (100) ;
un côté extérieur (206) qui est sensiblement en forme d'arc ;
un premier bord (208) agencé entre le côté intérieur (204) et le côté extérieur (206) ; et
un deuxième bord (210) opposé au premier bord (208) et agencé entre le côté intérieur (204) et le côté extérieur (206) ; et
une jupe (238) s'étendant du côté extérieur (206) à un angle par rapport au pont (202) ;
dans lequel lorsque la protection de tondeuse (200) est reliée à une tondeuse (100), le pont (202) et la jupe (238) définissent ensemble un espace pour loger un outil de coupe rotatif (130) d'un ensemble de coupe de la tondeuse (100) ;
**caractérisé en ce que** la protection de tondeuse (200) comprend en outre :
une première bride (212) agencée au niveau du premier bord (208) à un angle par rapport au pont (202) ; et
une pluralité de rainures (250), les rainures étant agencées et espacées le long d'un bord de la première bride (212), les rainures (250) étant conçues pour réduire le bruit généré par la tondeuse (100) pendant le fonctionnement.

2. Protection de tondeuse (200) selon la revendication 1, dans laquelle les rainures (250) sont des rainures en forme de U ou des rainures en forme de V.

3. Protection de tondeuse (200) selon la revendication 1, dans laquelle les rainures (250) sont agencées sur un bord droit de la première bride (212).

4. Protection de tondeuse (200) selon la revendication 1, dans laquelle les rainures (250) sont espacées de manière régulière.

5. Protection de tondeuse (200) selon la revendication 1, dans laquelle le nombre des rainures (250) est compris entre 8 et 16.

6. Protection de tondeuse (200) selon la revendication 5, dans laquelle le nombre des rainures (250) est 12.

7. Protection de tondeuse (200) selon la revendication 6, dans laquelle des rainures adjacentes (250) sont espacées les unes des autres d'environ 3 mm, et dans laquelle chacune de la pluralité de rainures (250) est d'environ 1 mm de profondeur.

8. Protection de tondeuse (200) selon l'une quelconque des revendications 1 à 7, dans laquelle le corps comprend en outre une deuxième bride (214), agencée au niveau du deuxième bord (210) à un angle par rapport au pont (202),
et dans laquelle le corps définit :
une entrée d'outil de coupe rotatif agencée au niveau du deuxième bord (210); et
une sortie d'outil de coupe rotatif agencée au niveau du premier bord (208).

9. Protection de tondeuse (200) selon l'une quelconque des revendications 1 à 7, dans laquelle le corps comprend en outre une ou plusieurs nervures (252) connectées entre la première bride (212) et le pont (202) et sensiblement perpendiculaires à la première bride (212) et au pont (202).

10. Protection de tondeuse (200) selon la revendication 9, dans laquelle le nombre des nervures (252) est compris entre 2 et 6.

11. Protection de tondeuse (200) selon la revendication 10, dans laquelle les nervures (252) sont espacées de manière régulière.

12. Protection de tondeuse (200) selon l'une quelconque des revendications 1 à 7, dans laquelle un angle entre la jupe (238) et le pont (202) est compris entre 90 degrés et 135 degrés.

13. Protection de tondeuse (200) selon l'une quelconque des revendications 1 à 7, dans laquelle un angle entre la première bride (212) et le pont (202) est d'environ 90 degrés.

14. Protection de tondeuse (200) selon l'une quelconque des revendications 1 à 7, dans laquelle le corps est formé d'un seul tenant.

15. Tondeuse (100) comprenant :
un ensemble de poignée (102) ;
un ensemble de coupe (104) agencé à une extrémité de l'ensemble de poignée (102), incluant
un outil de coupe rotatif (130) agencé pour être alimenté par une source d'alimentation pour effectuer des opérations de coupe ;
**caractérisé en ce que** :
la tondeuse (100) comprend en outre une protection de tondeuse (200) selon l'une quelconque des revendications 1 à 14, reliée à l'ensemble de coupe (104).
